# EUROPEAN PATENT APPLICATION

(11) **EP 4 703 136 A1**
(43) Date of publication of application: **04.03.2026**
(21) Application number: 24796513.0
(22) Date of filing: 13.02.2024
(51) Int. Cl.: B32B 27/28, B29B 17/02, C08J 7/04

(54) **MULTILAYER OBJECT HAVING PRIMER COMPOSITION LAYER FOR DEBONDING, AND DEBONDING METHOD FOR MULTILAYER OBJECT**

(30) Priority: 28.04.2023 JP 2023075066
(71) Applicant: Sakata INX Corporation, Osaka-shi, Osaka 541-0047 (JP)
(72) Inventor: TAKIMOTO, Kyohei, Osaka-shi, Osaka 541-0047 (JP); TANAKA, Hiroki, Osaka-shi, Osaka 541-0047 (JP); HARADA, Junichi, Osaka-shi, Osaka 541-0047 (JP)
(74) Representative: Müller-Boré & Partner Patentanwälte PartG mbB
(86) International application number: PCT/JP2024/004712
(87) International publication number: WO 2024/224754

(57) **Abstract**

It is an object to achieve good gas barrier properties at high temperature and high humidity, to allow a printed layer to be easily released from a resin base layer after use, and to allow the released printed layer to be easily separated from the release solution.

To achieve the object, a laminate including, laminated in sequence, a resin base layer, a release primer layer containing an ethylene vinyl alcohol-based resin, and a printed layer is provided.

## Description

### Technical Field

The present invention relates to a laminate including a release primer composition layer and to a method for separating the laminate.

### Background Art

Packaging materials using various types of plastic films are used for food, confectionary, daily goods, pet food, etc. due to their advantages in designability, cost efficiency, content protectability, transportability, etc. Many packaging materials have undergone gravure printing or flexographic printing in order to add designs and messages appealing to consumers.

To obtain these packaging materials, printing with no post-processing is used in which printing is performed on the surfaces of the base films of the packaging materials. Alternatively, printed surfaces formed on the surfaces of the base films of the packaging materials are optionally coated with an adhesive or an anchoring agent, and then the base films are subjected to printing for subsequent lamination.

In the printing for subsequent lamination, color ink compositions and a white ink composition are successively applied by printing to various base films such as polyester films, nylon films, and aluminum foils, and then a polyethylene film, a polypropylene film, etc. for heat sealing is stacked on the printed layer of the while ink composition by dry lamination using an adhesive, extrusion lamination using an anchor coating agent, etc. (see PTL 1).

In recent years, packages formed using plastic films as raw materials, plastic bottles, and other plastic products are discarded and dumped into the ocean, causing environmental pollution issues. These plastic products are broken into submicron-sized fragments (microplastics) in seawater and float therein. If marine organisms such as fish ingest these plastics, they are concentrated within their bodies. It is feared that this will affect the health of seabirds and humans who consume these marine organisms as food.

To address these issues, various methods have been proposed to reduce microplastics. One of them is a recycling method in which a plastic base is separated from a laminate including printing ink compositions layered on the base. Examples of the proposed method for separating the plastic base from the laminate include: release ink compositions (see, for example, PTL 2); release adhesives (see, for example, PTL 3); release anchor coating agents etc. (see, for example, PTL 4 to PTL 6); and release solutions (see, for example, PTL 7).

However, a problem with these methods is that barrier properties are insufficient.

In another proposed method, a resin layer containing polyvinyl alcohol (which may be hereinafter referred to as PVA) is provided as a release layer (for example, PTL 8).

However, a problem when the resin layer containing polyvinyl alcohol is used as a release layer is a reduction in gas barrier properties at high temperature and high humidity.

### Citation List

### Patent Literature

PTL 1: Japanese Unexamined Patent Application Publication No. 5-97959
PTL 2: Japanese Patent No. 6631964
PTL 3: Japanese Patent No. 6642688
PTL 4: Japanese Patent No. 6388131
PTL 5: Japanese Unexamined Patent Application Publication No. 2020-175620
PTL 6: Japanese Unexamined Patent Application Publication No. 2023-50125
PTL 7: Japanese Patent No. 6690806
PTL 8: International Publication No. 2021/090690

### Summary of Invention

### Technical Problem

It is an object of the invention to achieve good gas barrier properties at high temperature and high humidity and to separate and release a printed layer and a resin base layer from each other using a release solution after use. Solution to Problem

The present inventors have found that the foregoing object can be achieved by the following laminate and the following laminate separating method and have thus arrived at the invention.
1. A laminate including, laminated in sequence, a resin base layer, a release primer layer containing an ethylene vinyl alcohol-based resin, and a printed layer.
2. The laminate according to 1, wherein a ratio of a content of ethylene units to a total content of monomers forming the ethylene vinyl alcohol-based resin is 1 to 35 mol %.
3. The laminate according to 1 or 2, wherein a degree of saponification of the ethylene vinyl alcohol-based resin is 90% or more.
4. The laminate according to any of 1 to 3, wherein a solid coating weight of the release primer layer is 0.1 to 2.0 g/m².
5. The laminate according to any of 1 to 4, further including an anchor coating layer disposed between the resin base layer and the release primer layer.
6. A method for releasing a resin base layer, the method including: the step of immersing the laminate according to any of 1 to 5 in a release solution; and the step of collecting the resin base layer.

### Advantageous Effects of Invention

In the present invention, the laminate exhibits good barrier properties at high temperature and high humidity, and the resin base layer can be easily released from the printed layer using a release solution. This is advantageous in that the printed layer and the other layer can be collected separately and therefore the resin base layer can be reused.

### Description of Embodiments

The present invention provides a laminate including, laminated in sequence, a resin base layer, a release primer layer containing an ethylene vinyl alcohol-based resin (this layer may be hereinafter referred to as the "release primer layer"), and a printed layer. The release primer composition for forming the release primer layer is a release primer composition containing an ethylene vinyl alcohol-based resin (EVOH), and the laminate includes the layer formed of this release primer composition.

In the laminate of the invention, the release primer layer and the printed layer may be formed over the entire surface of the resin base layer that is on the side on which the release primer layer is formed. Alternatively, the release primer layer and the printed layer may be formed on part of the surface of the resin base layer that is on the side on which the release primer layer is formed.

### [Resin base layer]

The resin base layer in the invention may include only one layer or may include a plurality of layers. For example, a resin film including a paper base laminated with a resin may also be used. A laminate including a thermoplastic resin layer and a polyethylene-based resin layer may or may not be used.

The resin base layer used may be a resin base layer having a printable front surface or a resin base layer having a printable back surface.

Examples of the resin base layer include: resin films including polyester films such as polyethylene terephthalate (PET) films, polyolefin films such as polyethylene (PE) and polypropylene (PP) films, and polyamide films such as nylon films; any of the above resin films provided with a metal layer such as an aluminum layer; any of the above resin films provided with a transparent vapor deposited layer; and shrinkable resin films such as shrinkable polypropylene films (particularly, shrinkable polypropylene films with untreated surfaces), shrinkable polyvinyl chloride films, and shrinkable polyethylene phthalate films.

The surface of the resin base layer on the side on which the release primer composition layer is to be formed may be subjected to surface treatment in advance.

The surface treatment may be selected from plasma treatment, corona discharge treatment, the formation of an anchor coating agent layer, an adhesive layer, etc., and surface treatment for improving the adhesion between the surface of the resin base layer and the release primer composition layer.

Moreover, after the formation of a printing ink composition layer on the resin base layer with the release primer composition layer interposed therebetween, a sealant layer may be formed on the printed layer by dry lamination using an adhesive or extrusion lamination using an anchor coating agent.

### [Release primer layer]

The release primer layer in the invention is a layer disposed between the resin base layer and the printed layer. Moreover, to reuse the resin base layer after the use of the printed article, the release primer layer allows the resin base layer and the printed layer formed thereon to be separated from each other to thereby release the printed layer from the resin base layer.

The release primer composition containing the ethylene vinyl alcohol-based resin and used to form the release primer layer will next be described.

### <Release primer composition containing ethylene vinyl alcohol-based resin>

The laminate of the invention includes a layer formed of the release primer composition containing the ethylene vinyl alcohol-based resin (ethylene vinyl alcohol-based (EVOH) resin).

### (Ethylene vinyl alcohol-based resin)

The ethylene vinyl alcohol-based resin is obtained by saponifying an ethylene-vinyl acetate copolymer and is characterized by having good moisture barrier properties and high transparency.

The ethylene vinyl alcohol-based resin includes vinyl acetate copolymer units, saponified vinyl acetate copolymer units, and copolymer units derived from ethylene and may further include additional copolymerizable monomer units. Moreover, the ethylene vinyl alcohol-based resin includes copolymer units derived from ethylene and units derived from a vinyl alcohol structure as copolymer components.

The content of ethylene is a value obtained as follows. Ethylene included in the ethylene vinyl alcohol-based resin is defined as one copolymer component, and a component having a different unsaturated double bond is defined as the other copolymer component. Then the content of ethylene is determined by dividing the number of moles of ethylene by the total number of moles of all the copolymer components.

The content of ethylene in the ethylene vinyl alcohol-based resin is preferably 1 mol % or more and more preferably 4 mol % or more. The content of ethylene is preferably 35 mol % or less and more preferably 30 mol % or less.

If the content of ethylene is less than 1 mol %, the gas barrier properties at high temperature and high humidity tend to deteriorate. If the content of ethylene is more than 35 mol %, the viscosity tends to increase.

The degree of saponification of the ethylene vinyl alcohol-based resin is preferably 95% or more and more preferably 96% or more. If the degree of saponification is less than 95%, the gas barrier properties and the oil resistance may deteriorate.

The release primer composition can be obtained by adding the ethylene vinyl alcohol-based resin optionally to a solvent mixture of lower alcohols and stirring the resulting mixture to dissolve the ethylene vinyl alcohol-based resin.

The release primer composition may contain an inorganic layered compound so long as the adhesion between the release primer composition and the surface of its adjacent layer such as the resin base layer or the printed layer does not deteriorate.

The inorganic layered compound used may be an inorganic layered compound that swells and cleaves in a dispersion medium. Examples of the inorganic layered compound include: the kaolinite group having a 1:1 phyllosilicate structure; the antigorite group that belongs to the serpentine group; and the smectite group, the vermiculite group classified as hydrous silicate minerals, and the mica group that are classified according to the number of interlayer cations.

Specific examples of the inorganic layered compound include kaolinite, dickite, nacrite, halloysite, antigorite, chrysotile, pyrophyllite, montmorillonite, beidellite, hectorite, saponite, sauconite, stevensite, tetrasilylic mica, sodium taeniolite, muscovite, margarite, talc, vermiculite, phlogopite, xanthophyllite, and chlorite. These may be natural products or synthetic products. Flaky silica etc. may also be used.

Any of these may be used alone, or a combination of two or more types may be used.

In particular, montmorillonite is preferred from the viewpoint of the ease of application and the gas barrier properties when used for a barrier coating agent.

The dispersion medium contained in the release primer composition may be either an aqueous dispersion medium or an organic dispersion medium. The aqueous dispersion medium may be water alone or may be a dispersion medium prepared by mixing water with a water-miscible organic solvent such as an alcohol such as methanol, ethanol, or propanol, a polyhydric alcohol such as ethylene glycol or propylene glycol, an alkyl ether derivative thereof, an ester such as ethyl formate, methyl acetate, or ethyl acetate, or a ketone such as acetone.

From the viewpoint of maintaining an appropriate solid content, the dispersion medium used is preferably a mixture containing 50 to 95% by mass of water and 5 to 50% by mass of at least one selected from ethyl alcohol, propyl alcohol, and butyl alcohol, which are lower alcohols having 2 to 4 carbon atoms.

Preferably, the amount of the release primer layer is such that the solid coating weight is in the range of 0.1 to 2 g/m². If the solid coating weight is less than 0.1 g/m², the releasability tends to deteriorate. If the solid coating weight is more than 2 g/m², the adhesiveness tends to deteriorate.

### [Printed layer]

In the present invention, no particular limitation is imposed on the printed layer printed with a printing ink composition, and any well-known printed layer may be used. For example, the printed layer may be printed with a planographic offset printing ink, a gravure printing ink, or a flexographic printing ink using a printing plate or printed with an inkjet printing ink using no printing plate. Gravure printing inks and flexographic printing inks are most often used as food packaging printing inks for food packaging films that may become plastic wastes. In recent years, to address environmental concerns and to accommodate small-lot production, active energy ray curable inkjet printing ink compositions, active energy ray curable flexographic printing ink compositions, and active energy ray curable offset printing ink compositions are also increasingly used. Next, the gravure printing inks, the active energy ray curable inkjet printing ink compositions, and the active energy ray curable offset printing ink compositions will be described as examples.

Before the formation of the printed layer, an anchor coating agent layer and/or an adhesive layer may be formed on the surface of the release primer composition layer formed on the resin base layer. Alternatively, after the formation of the anchor coating agent layer and/or the adhesive layer on the surface of the resin base layer, the release primer composition layer may be formed thereon, and the printed layer may be further formed thereon.

### <Gravure printing ink composition>

The printing ink compositions containing gravure printing inks (inks for surface gravure printing, shrink gravure printing, and bottom gravure printing) each contain a binder resin, a coloring agent, a solvent such as an organic solvent or an aqueous medium, an additive, etc.

Examples of the binder resin include cellulose-based resins such as cellulose nitrate, (biomass) urethane resins, (biomass) polyamide resins, vinyl chloride/vinyl acetate copolymers, rosin-based resins and modified products thereof, ketone resins, cellulose-based resins, (biomass) polyester resins, and (meth)acrylic resins, and an appropriate combination of these resins may be used. In particular, an appropriate combination selected from cellulose-based resins, (biomass) urethane resins, (biomass) polyamide resins, (meth)acrylic resins, vinyl chloride/vinyl acetate copolymers, etc. may be used.

Examples of the coloring agent include organic and inorganic pigments and dyes used for general gravure inks. Examples of the organic pigment include azo-based, phthalocyanine-based, anthraquinone-based, perylene-based, perinone-based, quinacridone-based, thioindigo-based, dioxazine-based, isoindolinone-based, quinophthalone-based, azomethineazo-based, diketopyrrolopyrrole-based, and isoindoline-based pigments. Examples of the inorganic pigment include carbon black, titanium oxide, zinc oxide, zinc sulfide, barium sulfate, calcium carbonate, chromium oxide, silica, red iron oxide, aluminum, and mica. Other examples include lustrous pigments prepared by coating glass or massive flakes used as a base with a metal or metal oxide (e.g., METASHINE: Nippon Sheet Glass Co., Ltd.).

Examples of the organic solvent that can be used include aromatic organic solvents, ketone-based solvents such as acetone, methyl ethyl ketone, and methyl isobutyl ketone, ester-based solvents such as ethyl acetate, n-propyl acetate, butyl acetate, and propylene glycol monomethyl ether acetate, and alcohol-based solvents such as n-propanol, inopropanol, n-butanol, and propylene glycol monomethyl ether. In recent years, from the environmental point of view, ester-based solvents and alcohol-based solvents are preferably used.

Examples of the additive that can be used include an extender, a pigment dispersant, a leveling agent, an antifoaming agent, a wax, a plasticizer, an anti-blocking agent, an infrared absorber, an ultraviolet absorber, an aromatic, and a flame retardant.

Moreover, a crosslinking agent or a chelating agent may be further added to crosslink the printing ink layer itself to thereby increase the hardness.

### <Active energy ray curable inkjet printing ink composition>

Any conventionally used active energy ray curable inkjet printing ink composition can be used.

The active energy ray curable inkjet printing ink composition contains a coloring pigment and a photopolymerizable compound having a hydroxy group and optionally contains an initiator, a pigment dispersant, an additive, etc.

For example, an active energy ray curable inkjet printing ink composition described in WO2023/276290 may be used. This printing ink composition contains a coloring agent, a monofunctional (meth)acrylate having a hydroxy group, a polyfunctional monomer having an ether bond, and an amine-modified oligomer and optionally contains a polymerization initiator, a sensitizer, a pigment dispersant, and an additive.

### <Active energy ray curable offset printing ink composition>

Any conventionally used active energy ray curable offset printing ink composition can be used.

The active energy ray curable offset printing ink composition contains a coloring pigment and a photopolymerizable compound having a hydroxy group and optionally contains an initiator, a pigment dispersant, an additive, etc.

For example, active energy ray curable offset printing ink compositions described in Japanese Unexamined Patent Application Publications Nos. 2018-127541, 2015-168730, 2021-195502, 2020-33465, and 2018-21138 can be used.

### [Anchor coating layer]

In the laminate, an anchor coating layer for improving the adhesion between the resin base layer and the release primer layer may or may not be provided.

As the anchor coating agent forming the anchor coating layer, urethane-based, isocyanate-based, and polyethyleneimine-based anchor coating agents may be used.

### [Method for producing laminate including release primer layer]

The laminate of the invention can be obtained as follows. If necessary, the anchor coating agent is applied to the resin base layer to form an anchor coating layer, and then the release primer composition containing the ethylene vinyl alcohol-based resin is applied to form the release primer layer. Then a printing ink composition is applied by printing using a printer, an inkjet printing device, etc. to form a printed layer. Moreover, after the formation of the printed layer, a sealant layer may be formed by a dry lamination method or an extrusion lamination method to thereby obtain a laminate.

### [Method for separating laminate including release primer layer]

The laminate including the release primer layer is separated into the resin base layer and the printed layer to release the printed layer from the laminate including the release primer layer. To do this, the following step may be used. The laminate is cut into small pieces using any means, and the small pieces are immersed in an aqueous alkaline solution containing a basic compound such as sodium hydroxide or potassium hydroxide and used as a release solution. The release solution is stirred, if necessary. In this case, the sodium hydroxide or potassium hydroxide concentration is preferably 0.5 to 15.0% by mass, more preferably 1.0% by mass or more, and still more preferably 1.5% by mass or more. From the viewpoint of disposal of the used waste solution, the concentration is preferably 5.0% by mass or less and still more preferably 3.0% by mass or less. The temperature of the release solution during separation may be room temperature of about 25°C, or the release solution may be heated to 25 to 90°C. The immersion time is preferably 1 minute to 12 hours, more preferably 1 hour or shorter, still more preferably 30 minutes or shorter, and most preferably 10 minutes or shorter.

Moreover, to perform the separation smoothly, it is preferable that a sufficiently large amount of the release solution is used for the treatment. More specifically, the amount of the release solution is preferably 100 to 1,000,000 times the weight of the laminate cut into small pieces.

After the step of immersing the laminate in the release solution, the step of collecting the resin base layer and the printed layer is provided. When the resin base layer of the laminate is, for example, polyester, this separation method can be used to remove the ink layer within the release solution, and the separated polyester is washed with water and dried. A recycled polyester base material can thereby be obtained. The recycled polyester base material can be regenerated into pellets using an extruder for reuse.

### [EXAMPLES]

The present invention will next be described in detail by way of Examples. However, the invention is not limited only to the Examples. "%" means "% by mass," and "parts" means "parts by mass," unless otherwise specified.

### <Resin base layer>

The following three types of resin base layers were used (excluding a shrink resin base layer).
OPP: Biaxially stretched polypropylene film P-2161 #25 (TOYOBO CO., LTD.)
PET: Polyethylene terephthalate film E-5102 #12 (TOYOBO CO., LTD.)
NY: Nylon film ONY-15 #12 (UNITIKA Ltd.)
PE: Polyethylene film, corona treated L-LDPE film with a thickness of 25 µm (linear low-density polyethylene from Mitsui Chemicals Tohcello, Inc.)

### <Anchor coating agent>

TAKELAC A-3210 / TAKELAC A-3072 diluted with ethyl acetate to a solid content of 7%

### [Release primer compositions]

### <Release primer composition 1>

5 Parts by mass of an ethylene vinyl alcohol copolymer (product name: Soarnol V2504NB (ethylene content: 25 mol%)) was added to 95 parts by mass of a solvent mixture containing 50% by mass of purified water and 50% by mass of isopropyl alcohol, and the mixture was stirred until dissolution at 80°C to obtain a release primer composition 1 with a solid content of 5% by mass.

### <Release primer composition 2>

7 Parts by mass of an ethylene vinyl alcohol copolymer (product name: Soarnol V2504NB (ethylene content: 25 mol%)) was added to 93 parts by mass of a solvent mixture containing 50% by mass of purified water and 50% by mass of isopropyl alcohol, and the mixture was stirred until dissolution at 80°C to obtain a release primer composition 2 with a solid content of 7% by mass.

### <Release primer composition 3>

10 Parts by mass of an ethylene vinyl alcohol copolymer (product name: EXCEVAL HR-3010 (ethylene content: 4.5 mol%)) was added to 90 parts by mass of purified water, and the mixture was stirred at 95°C until dissolution. The mixture was diluted with a solvent mixture containing 50% by mass of purified water and 50% by mass of isopropyl alcohol to obtain a release primer composition 3 with a solid content of 5% by mass.

### <Release primer composition 4>

5 Parts by mass of an ethylene vinyl alcohol copolymer (product name: Soarnol DC3212 (ethylene content: 32 mol%)) was added to 95 parts by mass of a solvent mixture containing 30% by mass of purified water and 70% by mass of isopropyl alcohol, and the mixture was stirred until dissolution at 80°C to obtain a release primer composition 4 with a solid content of 5% by mass.

### <Release primer composition 5>

5 Parts by mass of montmorillonite (product name: KUNIPIA F, KUNIMINE INDUSTRIES CO., LTD.), which is an inorganic layered compound, was added to 95 parts by mass of purified water under stirring and sufficiently dispersed using a high-pressure disperser at a pressure of 50 MPa to thereby obtain an inorganic layered compound dispersion with a solid content of 5% by mass.

Next, 15 parts by mass of the inorganic layered compound dispersion was added to 85 parts by mass of the release primer composition 1 under high-speed stirring, and the mixture was subjected to dispersion treatment using a high-pressure disperser at a pressure of 50 MPa. The resulting dispersion was filtered using a 255-mesh filter to obtain a release primer composition 5 (the ethylene vinyl alcohol copolymer resin / the inorganic layered compound = 85 / 15 (solid content ratio)) with a solid content of 5% by mass.

### <Release primer composition in Comparative Example 1>

2 Parts by mass of polyethyleneimine (EPOMIN P-1000 (NIPPON SHOKUBAI Co., Ltd.)) (amine value: 18 mmol/g) was added to 98 parts by mass of a solvent mixture containing 50% by mass of purified water and 50% by mass of isopropyl alcohol, and the mixture was stirred until dissolution to obtain a release primer composition in Comparative Example 1 with a solid content of 2% by mass.

### <Release primer composition in Comparative Example 2>

5 Parts by mass of POVAL 5-98 (KURARAY Co., Ltd.) was added to 95 parts by mass of a solvent mixture containing 50% by mass of purified water and 50% by mass of isopropyl alcohol, and the mixture was stirred to obtain a release primer composition in Comparative Example 2 with a solid content of 5% by mass.

### <Production of resin base layer with release primer composition layer formed thereon>

Each resin base layer was coated with the anchor coating agent using a bar coater such that the dry coating weight was 0.1 g/m², and the surface of the anchor coating agent layer was coated with one of the release primer compositions 1, 3, and 4 using a bar coater such that the dry coating weight was 1.0 g/m².

Each resin base layer was coated with the anchor coating agent using a bar coater such that the dry coating weight was 0.1 g/m², and the surface of the anchor coating agent layer was coated with the release primer composition 5 using a bar coater such that the dry coating weight was 0.5 g/m².

Each resin base layer was coated with the anchor coating agent using a bar coater such that the dry coating weight was 0.1 g/m², and the surface of the anchor coating agent layer was coated with the release primer composition 2 using a bar coater such that the dry coating weight was 1.4 g/m².

Each resin base layer was coated with the anchor coating agent using a bar coater such that the dry coating weight was 0.1 g/m², and the surface of the anchor coating agent layer was coated with the release primer composition in Comparative Example 1 using a bar coater such that the dry coating weight was 0.2 g/m².

Each resin base layer was coated with the anchor coating agent using a bar coater such that the dry coating weight was 0.1 g/m², and the surface of the anchor coating agent layer was coated with the release primer composition in Comparative Example 2 using a bar coater such that the dry coating weight was 1.0 g/m².

### <Surface printing ink composition>

The surface printing ink composition used may be, for example, (SUPERIOR-N Indigo 800 YZ RE-1 (manufactured by SAKATA INX CORPORATION)). However, the surface printing ink composition is not limited to this composition.

### (Printing with surface printing ink composition)

Each of the four types of resin base layers was coated with the anchor coating agent using a bar coater such that the dry coating weight was 0.1 g/m². Then the coated surface was coated with one of the release primer compositions 1 to 5 in the Examples and the release primer compositions 1 and 2 in the Comparative Examples (one of the seven release primer compositions) using a bar coater. Specifically, a total of 28 samples with respective release primer composition layers formed thereon were obtained. A solvent mixture (ethyl acetate / propyl acetate / IPA (isopropyl alcohol) = 50 / 25 / 25) was added to the surface printing ink composition to dilute the surface printing ink composition such that the value obtained using Zahn Cup No. 3 manufactured by Rigo was 16 seconds to thereby obtain a diluted surface printing ink composition. The diluted surface printing ink composition was applied by printing to each of the release primer composition layers of the samples using a bar coater and dried to obtain a printed article (laminate) prepared using the corresponding surface printing ink composition.

Each of the printed articles (laminates) prepared using the respective surface printing ink compositions was cut into small pieces of about MD 15 mm × TD 25 mm to obtain a sample for a printed layer peeling test.

### <UV curable inkjet printing ink composition>

The UV curable inkjet printing ink composition used may be prepared as follows. However, the UV curable inkjet printing ink composition is not limited to the following composition.

### (Preparation of UV curable inkjet printing ink composition)

The UV curable inkjet printing ink composition was prepared using 2.6 parts by mass of P.B.15:4, 1.04% by mass of Solsperse S56000 (manufactured by the Lubrizol Corporation), 30.00 parts by mass of an amine-modified acrylate oligomer (CN371NS manufactured by Sartomer), 4.50% by mass of 1,6-hexanediol diacrylate, 7.96 parts by mass of neopentyl glycol PO-modified diacrylate, 7.00 parts by mass of dipropylene glycol diacrylate, 5.00 parts by mass of phenyl (2,4,6-trimethylbenzoyl)phosphinic acid ethyl ester, 3.00 parts by mass of bis(2,4,6-trimethylbenzoyl)phenoxyphosphine oxide (IGM Resins B.V.), 2.50 parts by mass of (2-carboxymethoxythioxanthone)-(polytetramethylene glycol 250) diester (IGM Resins B.V.), 0.40 parts by mass of a quinone-based polymerization inhibitor (UV22, BASF), and 0.20 parts by mass of a silicon-based surface modifier (BYK-377 manufactured by BYK-Chemie).

### (Printing with UV curable inkjet printing ink composition)

Each of the four types of resin base layers was coated with the anchor coating agent using a bar coater such that the dry coating weight was 0.1 g/m². Then the coated surface was coated with one of the release primer compositions 1 to 5 and the release primer compositions in Comparative Examples 1 and 2 (one of the seven release primer compositions) using a bar coater. Specifically, a total of 28 samples with respective release primer composition layers formed thereon were obtained. The UV curable inkjet printing ink composition was applied by printing to each of the release primer composition layers of the samples using a bar coater and fully cured using a UV-LED light lamp manufactured by Phoseon Technology at a cumulative UV dose of 180 mJ/cm² to thereby obtain a printed layer (laminate). The lamp was placed such that the distance between the lamp and the surface coated with the ink was 2 cm.

Each of the printed articles (laminates) prepared using the UV curable inkjet printing ink composition was cut into small pieces of about MD 15 mm × TD 25 mm to obtain a sample for a printed layer peeling test.

### <EB (electron beam) curable offset printing ink composition>

The EB (electron beam) curable offset printing ink composition used may be prepared as follows. However, the EB (electron beam) curable offset printing ink composition is not limited to the following composition.

### (Preparation of EB curable offset printing ink composition)

22.7 Parts by mass of PB15:3, 40.0 parts by mass of a polyester acrylate oligomer: CN704 (Sartomer), 36.2 parts by mass of 6EO-modified TMPTA (6EO-modified trimethylolpropane triacrylate), 0.1 parts by mass of methylhydroquinone, and 1.0 parts by mass of dimethyl silicone oil: TSF-451-5M (Momentive) were prepared and mixed under stirring to thereby obtain an EB curable offset printing ink composition.

### (Printing with EB (electron beam) curable offset printing ink composition)

Each of the four types of resin base layers was coated with the anchor coating agent using a bar coater such that the dry coating weight was 0.1 g/m². Then the coated surface was coated with one of the release primer compositions 1 to 5 in the Examples and the release primer compositions 1 and 2 in the Comparative Examples (one of the seven release primer compositions) using a bar coater. Specifically, a total of 28 samples with respective release primer composition layers formed thereon were obtained. Next, 0.1 cc of the EB curable offset printing ink composition was transferred onto each of the release primer composition layers of the samples using a simple drawdown machine (RI Tester manufactured by Houei Seikou, Co., Ltd.) and fully cured by irradiation with an electron beam at a conveyor speed of 10 m/minute using an electron beam curing device (EC90, manufactured by IWASAKI ELECTRIC Co., Ltd.) (acceleration voltage: 90 kV, irradiation dose: 30 kGy) to thereby obtain a printed article (laminate). Each of the printed articles (laminates) prepared using the EB curable offset printing ink composition was cut into small pieces of about MD 15 mm × TD 25 mm to obtain a sample for a printed layer peeling test.

### <UV (ultraviolet ray) curable offset printing ink composition>

The UV (ultraviolet ray) curable offset printing ink composition used may be prepared as follows. However, the UV curable offset printing ink composition is not limited to the following composition.

### (Preparation of UV curable offset printing ink composition)

50.0 Parts by mass of a rosin-modified maleic acid resin (HARIMACK M-453, Harima Chemicals Group, Inc.), 41.0 parts by mass of trimethylolpropane (6EO)triacrylate, 2.0 parts by mass of dimethyl silicone oil (KF-96H-100,000 cs), 5.0 parts by mass of 2-methyl-1(4-methylthiophenyl)-2-morpholinopropan1-one, and 4.4'-bis(diethylamino)benzophenone were prepared and mixed under stirring to obtain a UV curable offset printing ink composition.

### (Printing with UV curable offset printing ink composition)

Each of the four types of resin base layers was coated with the anchor coating agent using a bar coater such that the dry coating weight was 0.1 g/m². Then the coated surface was coated with one of the release primer compositions 1 to 5 in the Examples and the release primer compositions 1 and 2 in the Comparative Examples (one of the seven release primer compositions) using a bar coater. Specifically, a total of 28 samples with respective release primer composition layers formed thereon were obtained. Next, 0.1 cc of the UV curable offset printing ink composition was transferred onto each of the release primer composition layers of the samples using a simple drawdown machine (RI Tester manufactured by Houei Seikou, Co., Ltd.) and fully cured using a UV-LED light lamp manufactured by Phoseon Technology at a cumulative UV dose of 180 mJ/cm² to thereby obtain a printed article (laminate). The lamp was placed such that the distance between the lamp and the surface coated with the ink was 2 cm.

Each of the printed articles (laminates) prepared using the UV curable offset printing ink composition was cut into small pieces of about MD 15 mm × TD 25 mm to obtain a sample for a printed layer peeling test.

### <Shrink printing ink composition>

The shrink printing ink composition used may be, for example, XBT-7018 N Indigo 800 (manufactured by SAKATA INX CORPORATION). However, the shrink printing ink composition is not limited to this composition.

### (Printing with shrink printing ink composition)

A crystallizable shrink PET (polyethylene terephthalate) film was coated with the anchor coating agent using a bar coater such that the dry coating weight was 0.1 g/m², and the anchor coating agent was dried. Then the release primer composition 1 was applied using a bar coater and dried. Then the shrink printing ink composition was applied by printing to the release primer composition layer using a bar coater, dried and cured to obtain a printed article (laminate).

The printed article (laminate) prepared using the shrink printing ink composition was cut into small pieces of about MD 15 mm × TD 25 mm to obtain a sample for a printed layer peeling test.

### <Evaluation of ink removability>

### (Release solution composed of alkaline aqueous solution)

2.0 Parts by mass of sodium hydroxide was added to 98.0 parts by mass of water, and the mixture was stirred until dissolution to obtain a release solution composed of an alkaline aqueous solution.

### (Separation)

The release solution composed of the alkaline aqueous solution was placed in an HDPE (high-density polyethylene)-made container and heated to 70°C in a hot water bath. Then one of the printed layer peeling test samples was immersed in the release solution, and the release solution was stirred for 30 minutes using a stainless steel-made stirring blade with a blade diameter of 25 mm. After the stirring, the HDPE (high-density polyethylene)-made container was removed from the hot water bath and left to stand at room temperature for 5 minutes. The film pieces such as the resin base layer were separated from the release solution using a stainless steel-made net with an opening of about 2 mm.

### (Rinsing)

The separated film pieces were transferred to a 200 cc HDPE-made container, and 100 g of water was added, which was stirred for 5 minutes using a stainless steel-made stirring blade with a blade diameter of 25 mm. The container was left to stand for 5 minutes, and then the film pieces were separated from the water using a stainless steel-made net. The film pieces were dried, and the removability of the ink from the film was evaluated by visual inspection.

### <Evaluation criteria>

### (Ink removability)

o (good): The ink coating was completely peeled as coating pieces from the film
× (poor): No peeling was found

### (Tape adhesive strength (for each printed article immediately after printing and drying))

A cellophane tape was applied to the printed surface of each printed article and rapidly peeled off. Then the degree of peeling of the printed coating was used to evaluate the adhesiveness according to the following evaluation criteria. (Evaluation criteria)
o (good): The area ratio of the printed coating peeled from the film was less than 5%.
Δ (fair): The area ratio of the printed coating peeled from the film was 5% or more and less than 30%.
× (poor): The area ratio of the printed coating peeled from the film was 30% or more.

### (Barrier properties)

An oxygen transmission rate measurement device (product name: OX-TRAN1/50, Mocon) was used to measure the oxygen transmission rate (OTR value) according to JIS K7126 method B. The measurement was performed at 20°C in an atmosphere of 65%RH.
∘ (good): The OTR value was 10 or less
× (poor): The OTR value was more than 10

The test results are shown in the following Table 1. The "No release primer composition was applied" row shows an example in which no anchor coating agent layer and no release primer layer were formed. In the other examples, the anchor coating agent was applied, and then one of the release primer compositions 1 to 5 and the release primer compositions in Comparative Examples 1 and 2 was applied.

The effects were the same irrespective of the resin base layers, the printing methods, and the types of printing inks, and therefore the results for them are summarized in the following Table 1.

**[Table 1]**

| | Removability | Barrier properties | Adhesiveness immediately after printing |
|---|---|---|---|
| No release primer composition was applied | × | × | ○ |
| Release primer composition 1 | ○ | ○ | ○ |
| Release primer composition 2 | ○ | ○ | ○ |
| Release primer composition 3 | ○ | ○ | ○ |
| Release primer composition 4 | ○ | ○ | ○ |
| Release primer composition 5 | ○ | ○ | ○ |
| Polyethyleneimine (release primer composition in Comparative Example 1) | ○ | × | ○ |
| PVA (release primer composition in Comparative Example 2) | ○ | × | ○ |

In the above examples, the anchor coating layer was formed. However, even when the anchor coating layer was not formed, the printed layer had sufficient adhesiveness immediately after printing etc.

As shown in Table 1, when the release primer layer in the invention is formed using any of the release primer compositions in the invention, good removability and also good barrier properties are achieved irrespective of the resin base layers, the presence or absence of the anchor coating layer, the printing ink compositions, and the printing methods.

Next, examples in which the bottom printing ink composition was used will be described.

When a layer formed of the bottom printing ink composition is used as the printed layer, the laminate formed includes the resin base layer, the anchor coating layer, the release primer layer, the printed layer, and the sealant layer.

### <Release primer composition>

The same release primer compositions as described above were used.

### <Bottom printing ink composition>

The bottom printing ink composition used may be, for example, BELLEFLORA R Indigo 800MK (manufactured by SAKATA INX CORPORATION). However, the bottom printing ink composition is not limited to this composition.

### (Printing with bottom printing ink composition)

Each of the four types of resin base layers was coated with the anchor coating agent using a bar coater such that the dry coating weight was 0.1 g/m². Then the coated surface was coated with one of the release primer compositions 1 to 5 in the Examples and the release primer compositions 1 and 2 in the Comparative Examples (one of the seven release primer compositions) using a bar coater. Specifically, a total of 28 samples with respective release primer composition layers formed thereon were obtained. A solvent mixture (ethyl acetate / propyl acetate / IPA (isopropyl alcohol) = 50 / 25 / 25) was added to the bottom printing ink composition to dilute the bottom printing ink composition such that the value obtained using Zahn Cup No. 3 manufactured by Rigo was 16 seconds to thereby obtain a diluted bottom printing ink composition. The diluted bottom printing ink composition was applied by printing to each of the release primer composition layers of the samples using a bar coater and dried to obtain a printed layer.

### (Dry lamination)

RXC-22 #60 (unstretched propylene film (Mitsui Chemicals Tohcello, Inc.)) and T.U.XTM: linear low-density polyethylene (Mitsui Chemicals Tohcello, Inc.) were each coated with an adhesive (TAKELAC A-515 / TAKELAC A-50 when the resin base layer was PET, NY, or PE, solid content: 30% by mass) (TAKELAC A-969V / TAKELAC A-5 when the resin base layer was OPP (solid content: 30% by mass) using a bar coater. Then one of the films was applied by hand to each printed layer to produce a laminate.

### (Extrusion lamination)

Each of the printed articles (printed layers) was coated with an AC agent (TAKELAC A-3210 / TAKELAC A-3072, solid content: 7% by mass), and (molten polyethylene SUMIKATHENE L705, resin temperature: 355°C (Sumitomo Chemical Co., Ltd.)) was laminated using an extrusion laminator to thereby produce a laminate.

### <Evaluation of ink removability>

Each of the laminated printed articles was cut into small pieces of about MD 15 mm × TD 25 mm to obtain a sample for a printed layer peeling test.

The evaluation was performed using the same method as described above.

### <Evaluation criteria>

### (Ink removability)

o (good): The ink coating was completely peeled as coating pieces from the resin base layer
× (poor): No peeling was found

The results are shown in Table 2.

### <Evaluation of tape adhesive strength (for each printed article immediately after printing and drying) and barrier properties>

The evaluation was performed using the same methods as described above. The results are shown in Table 2.

### (Laminate strength)

Each of the laminates was cut to a width of 15 mm, and its T-type peel strength was measured using a peeling tester manufactured by YASUDA SEIKI SEISAKUSHO, LTD.

### (Evaluation criteria)

For the OPP resin base layer
∘ (good): The peel strength was 1.2 N/15 mm or more
Δ (fair): The peel strength was 0.7 N/15 mm or more and less than 1.2 N/15 mm
× (poor): The peel strength was less than 0.7 N/15 mm

For the PET, NY, and PE resin base layers
∘ (good): The peel strength was 5 N/15 mm or more
Δ (fair): The peel strength was 3 N/15 mm or more and less than 5 N/15 mm
× (poor) The peel strength was less than 3 N/15 mm.

The test results are shown in Table 2. The "No release primer composition was applied" row shows an example in which no anchor coating agent layer and no release primer layer were formed. In the other examples, the anchor coating agent was applied, and then one of the release primer compositions 1 to 5 and the release primer compositions in Comparative Examples 1 and 2 was applied.

The effects were the same irrespective of the resin base layers, the printing methods, the printing ink layers, the adhesive layers, and the types of sealant layers, and therefore the results for them are summarized in the following Table 2.

**[Table 2]**

| | Removability | Barrier properties | Adhesiveness | Laminate strength |
|---|---|---|---|---|
| No release primer composition was applied | × | × | ○ | ○ |
| Release primer composition 1 | ○ | ○ | ○ | ○ |
| Release primer composition 2 | ○ | ○ | ○ | ○ |
| Release primer composition 3 | ○ | ○ | ○ | ○ |
| Release primer composition 4 | ○ | ○ | ○ | ○ |
| Release primer composition 5 | ○ | ○ | ○ | ○ |
| Polyethyleneimine (release primer composition in Comparative Example 1) | ○ | × | ○ | ○ |
| PVA (release primer composition in Comparative Example 2) | ○ | × | ○ | ○ |

In the above examples, the anchor coating layer was formed. However, even when the anchor coating layer was not formed, the adhesiveness immediately after printing etc. was sufficient, and no particular problems occurred.

As shown in Table 2, when the release primer layer in the invention is formed using any of the release primer compositions in the invention, good removability, good barrier properties, good adhesiveness immediately after printing, and good laminate strength are achieved irrespective of the resin base layers, the printing ink compositions, and the difference in printing method.

## Claims

1. A laminate comprising, laminated in sequence, a resin base layer, a release primer layer containing an ethylene vinyl alcohol-based resin, and a printed layer.

2. The laminate according to claim 1, wherein a ratio of a content of ethylene units to a total content of monomers forming the ethylene vinyl alcohol-based resin is 1 to 35 mol %.

3. The laminate according to claim 1 or 2, wherein a degree of saponification of the ethylene vinyl alcohol-based resin is 90% or more.

4. The laminate according to claim 1 or 2, wherein a solid coating weight of the release primer layer is 0.1 to 2.0 g/m².

5. The laminate according to claim 1 or 2, further comprising an anchor coating layer disposed between the resin base layer and the release primer layer.

6. A method for releasing a resin base layer, the method comprising: the step of immersing the laminate according to claim 1 or 2 in a release solution; and the step of collecting the resin base layer.
